# FASCICULE DE BREVET EUROPEEN

(11) **EP 3 117 092 B1**
(45) Date de publication et mention de la délivrance du brevet: **01.07.2020**
(21) Numéro de dépôt: 15703562.7
(22) Date de dépôt: 05.02.2015
(51) Int. Cl.: F02M 61/18, F02F 3/22, F02F 3/06

(54) **MOTEUR À COMBUSTION À INJECTION DIRECTE DE COMBUSTIBLE À ALLUMAGE PAR COMPRESSION COMPRENANT DES MOYENS DE REFROIDISSEMENT DU PISTON**
VERBRENNUNGSMOTOR MIT KRAFTSTOFFDIREKTEINSPRITZUNG MIT KOMPRESSIONSZÜNDUNG MIT MITTELN ZUR KÜHLUNG DES KOLBENS
COMBUSTION ENGINE WITH DIRECT FUEL INJECTION WITH COMPRESSION IGNITION COMPRISING MEANS FOR COOLING THE PISTON

(30) Priorité: 14.03.2014 FR 1452118
(43) Date de publication de la demande: 18.01.2017
(73) Titulaire: IFP Energies nouvelles, 92500 Rueil-Malmaison (FR)
(72) Inventeur: MARTINEZ, Lionel, F-78550 Maulette (FR); RICHARD, Stéphane, F-78550 Bazainville (FR); LAGET, Olivier, F-92500 Rueil-Malmaison (FR)
(74) Mandataire: IFP Energies nouvelles
(86) Numéro de dépôt international: PCT/EP2015/052440
(87) Numéro de publication internationale: WO 2015/135699

(56) Documents cités:
- DE-A1-102010 044 514
- FR-A1- 2 868 480
- JP-U- S61 144 242
- US-A- 5 595 145
- US-A1- 2003 221 639

## Description

La présente invention se rapporte à un moteur à combustion à injection directe de combustible à allumage par compression comprenant des moyens de refroidissement du piston.

Elle concerne plus particulièrement un tel moteur utilisable dans le domaine aéronautique ou routier ou dans le domaine des installations stationnaires, comme un groupe électrogène.

Ce type de moteur comprend généralement au moins un cylindre, un piston comprenant un téton disposé dans un bol concave et coulissant dans ce cylindre en un mouvement rectiligne alternatif, des moyens d'admission d'un comburant, des moyens d'échappement de gaz brûlés, une chambre de combustion, et des moyens d'injection pour injecter un combustible dans la chambre de combustion.

Comme cela est généralement admis, lors de la conception d'un moteur, les contraintes de performances, d'émissions de polluants et de tenue mécanique de la chambre de combustion sont de plus en plus fortes alors que les moyens de les satisfaire sont opposés.

Ainsi l'augmentation des performances entrainent généralement une augmentation des émissions de polluants et des contraintes mécaniques plus fortes.

Il est donc nécessaire de pallier ces contraintes de manière à garantir des émissions de polluants limitées et une tenue mécanique satisfaisante sur toute la plage de fonctionnement du moteur et en particulier à très forte charge. En particulier pour les émissions polluantes, l'utilisation de la totalité du comburant présent dans la chambre de combustion, par exemple un comburant comprenant de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

En pratique, le combustible reste confiné dans le bol et ne peut pas se mélanger au comburant situé notamment dans la chasse, c'est-à-dire dans le volume localisé dans la partie haute de la chambre de combustion délimité par la paroi du cylindre et la face de la culasse en regard du piston.

Ceci a pour inconvénients de créer des zones à fortes richesse dans la chambre de combustion engendrant une forte production de suies, d'oxyde de carbone (CO) et d'hydrocarbures imbrûlés (HC) lors de la combustion de ce mélange carburé.

De plus, pour revenir sur la problématique de tenue mécanique, la charge thermique est concentrée sur le réentrant du piston, c'est-à-dire le col ou la restriction de diamètre de bol qui marque la transition entre le bol du piston et la zone supérieure englobant la chasse, ce qui peut être limitant en termes de tenue mécanique à très fortes charges.

Pour pallier ces inconvénients, et comme cela est mieux décrit dans la demande de brevet français N° 13 60426 du demandeur, il est prévu d'utiliser un moteur à combustion interne comprenant des moyens d'injection de combustible avec des jets selon au moins deux angles de nappe et un piston comportant un bol muni d'un téton avec deux volumes de zones de combustion et une aérodynamique interne améliorant sensiblement la qualité de la combustion. Un moteur similaire est montré dans le document FR2868480.

Cependant, la volonté d'accroitre la densité de la puissance de ce type de moteurs amène les concepteurs à reconsidérer la taille et donc la masse des différentes pièces constitutives de ce type de moteur.

Il est notable que le bloc moteur représente l'une des pièces les plus importantes du moteur et il est souvent envisagé de réduire la hauteur de cette pièce (réduction de la hauteur de tablature) afin d'en réduire de façon notable la masse. Cette modification de hauteur entraîne notamment une réduction de la hauteur du piston.

Or l'accroissement de la densité de puissance du moteur passe aussi par une augmentation de puissance spécifique des moteurs.

Ceci induit une augmentation substantielle des sollicitations mécaniques des pièces constitutives de la chambre de combustion telles que la culasse, le cylindre et le piston. La volonté de conserver un niveau de fiabilité important, notamment en tenue mécanique pour ce type de moteur, malgré la réduction nécessaire de la hauteur du piston et l'augmentation des sollicitations, implique l'utilisation de l'acier comme matière constitutive de ce piston à la place de l'aluminium utilisé conventionnellement et cela pour permettre une meilleure tenue du piston.

Cependant l'acier possède une conductivité thermique inférieure à celle de l'aluminium. Il devient donc nécessaire de mettre en place des moyens permettant l'évacuation de la chaleur des parties de cette pièce les plus sollicitées thermiquement comme le réentrant, le bas du bol et la zone de chasse.

Comme cela est largement connu, notamment par la demande de brevet français N° 2 839 116, il est possible d'améliorer le refroidissement de ce type de piston par la mise en place de moyens de refroidissement sous la forme d'une galerie de circulation d'huile couplée à un système d'aspersion d'huile spécifique sur la face inférieure du piston

Cependant une telle disposition de galerie n'est pas à ce jour optimisée et cela entraîne une élévation non souhaitée de la température du piston.

La présente invention se propose de remédier aux inconvénients mentionnés ci-dessus grâce à un piston qui comprend des galeries assurant de manière simple et peu coûteuse son refroidissement.

A cet effet, l'invention concerne un moteur à combustion interne à injection directe à allumage par compression comprenant au moins un cylindre, une culasse portant des moyens d'injection de combustible projetant le combustible selon au moins deux nappes de jets de combustible d'angles de nappe différents, un piston coulissant dans ce cylindre, une chambre de combustion délimitée sur un côté par la face supérieure du piston comportant un téton s'érigeant en direction de la culasse et disposé au centre d'un bol concave avec au moins deux zones de mélange, et des moyens de refroidissement du piston logés dans la matière du piston, caractérisé en ce que les moyens de refroidissement comprennent au moins un galerie circonférentielle concentrique au bol du piston et disposée en regard d'au moins deux zones de mélange.

La forme de la section de la galerie peut être une forme cylindrique.

L'étendue surfacique de la section de la galerie peut être comprise entre 20 mm² et 200 mm².

L'étendue surfacique d'une galerie peut être différente de l'étendue surfacique de l'autre galerie.

La galerie peut s'étendre en regard des deux zones de mélange.

Les distances entre les surfaces du bol et les parois de la galerie la plus proches peuvent être comprises entre 2mm et 7mm.

Les autres caractéristiques et avantages de l'invention vont apparaître maintenant à la lecture de la description qui va suivre, donnée à titre uniquement illustratif et non limitatif, et à laquelle sont annexées :
- la figure 1 qui montre un moteur à combustion interne selon l'invention ;
- la figure 2 qui est une vue partielle à grande échelle d'une demi-section du profil du bol de piston du moteur de la figure 1 et
- la figure 3 qui illustre à plus grande échelle la disposition des moyens de de refroidissement dans le piston du moteur des figures 1 et 2.

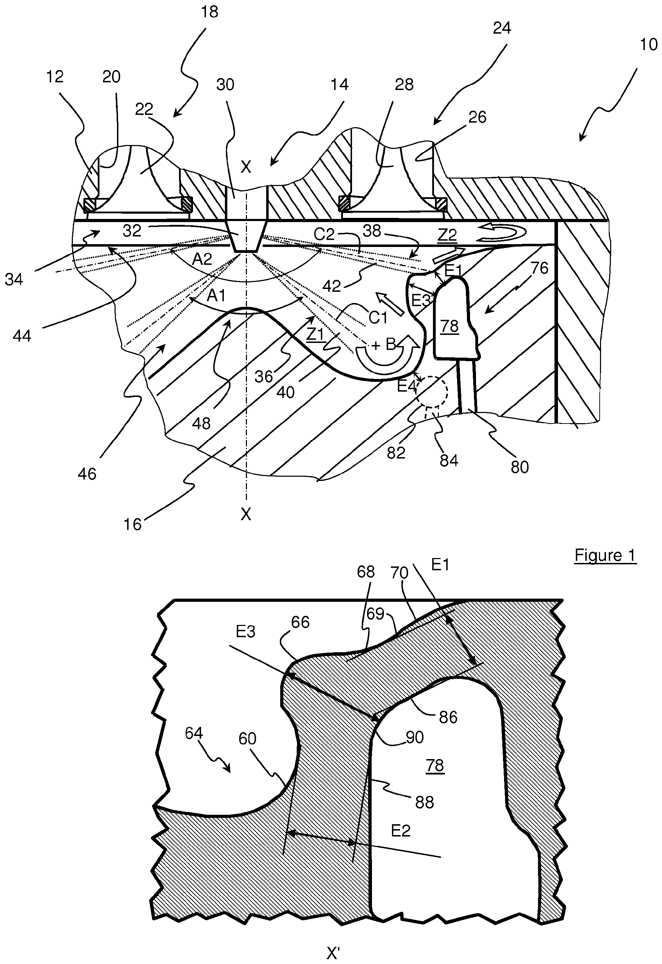

En se référant à la figure 1, un moteur à combustion interne à injection directe à allumage par compression comprend au moins un cylindre 10, une culasse 12 fermant le cylindre en partie haute, des moyens d'injection de combustible 14 portés par la culasse et un piston 16, de préférence en acier, d'axe XX coulissant dans le cylindre en un mouvement rectiligne alternatif.

Par combustible, il est entendu un carburant liquide, comme du gazole, du kérosène ou tout autre combustible ayant les caractéristiques physico-chimiques permettant le fonctionnement d'un moteur de type allumage par compression incluant un système d'injection directe de ce combustible.

Ce moteur comprend également un moyen d'échappement 18 des gaz brûlés avec au moins une tubulure d'échappement 20 dont l'ouverture peut être contrôlée par tous moyens, comme par exemple une soupape d'échappement 22 et un moyen d'admission 24 d'un comburant avec au moins une tubulure d'admission 26 dont l'ouverture peut être contrôlée par tous moyens, comme par exemple une soupape d'admission 28.

Par le terme comburant, il est compris de l'air à pression ambiante ou de l'air suralimenté ou encore un mélange d'air (suralimenté ou non) avec des gaz brûlés.

Les moyens d'injection comprennent au moins un injecteur de combustible 30, de préférence disposé dans l'axe XX du piston dont le nez 32 comporte une multiplicité d'orifices au travers desquels le combustible est pulvérisé et projeté en direction de la chambre de combustion 34 du moteur.

C'est à partir de ces moyens d'injection que le combustible projeté forme au moins deux nappes de jets de combustible, ici deux nappes 36 et 38 de jets de combustibles 40 et 42, qui, dans l'exemple montré, ont un axe général confondu avec celui du piston 16 tout en étant situées axialement l'une au-dessus de l'autre.

Plus précisément, la nappe 36, qui est située le plus près du piston 16, est dénommée dans la suite de la description nappe inférieure alors que la nappe 38 placée le plus loin de ce piston est appelée nappe supérieure.

Comme visible sur la figure 1, ces deux nappes forment des angles de nappe A1 et A2 différents l'un de l'autre. Par angle de nappe, il est entendu l'angle au sommet que forme le cône issu de l'injecteur et dont la paroi périphérique fictive passe par tous les axes C1 ou C2 des jets de combustible 40 ou 42.

Avantageusement, l'angle de nappe A1 de la nappe basse est au plus égal à 130°, de préférence compris entre 40° et 130°, alors que l'angle de nappe A2 de la nappe haute est au plus égale à 180°, de préférence compris entre 150° et 180°.

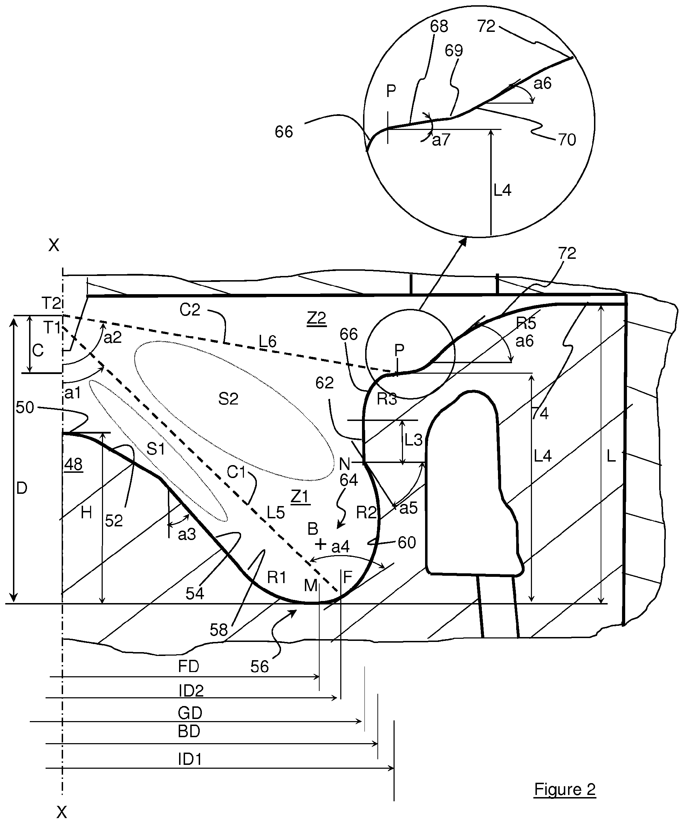

Pour des raisons de simplification dans la suite de la description l'angle a1 correspond à A1/2 alors que l'angle a2 correspond à A2/2 (Voir figure 2).

L'écart entre les deux angles de nappe est donc d'au moins 50°. Ceci permet ainsi de limiter les recouvrements de jets de combustible entres les deux nappes et donc la formation de polluants, tels que les suies.

Bien entendu, il peut être prévu que les moyens d'injection ne soient pas disposés dans l'axe XX, mais dans ce cas, l'axe général des nappes de jets de combustible issues de l'injecteur de combustible est pour le moins sensiblement parallèle à cet axe XX.

De même, il peut être prévu que chaque nappe soit portée par un injecteur distinct (injecteur simple nappe) avec un ciblage dédié dans des zones distinctes de la chambre de combustion.

La chambre de combustion 34 est délimitée par la face interne de la culasse 12 en vis à vis du piston, la paroi interne circulaire du cylindre 10 et la face supérieure 44 du piston 16.

Cette face supérieure du piston comporte un bol concave 46, ici d'axe confondu avec celui du cylindre, dont la concavité est tournée vers la culasse et qui loge un téton 48 situé sensiblement au centre du bol, qui s'élève vers la culasse 12, en étant de préférence coaxial avec l'axe des nappes de combustible issues de l'injecteur 30.

Bien entendu, il peut être prévu que l'axe du bol ne soit pas coaxial avec celui du cylindre mais l'essentiel réside dans la disposition selon laquelle l'axe de la nappe de jets de combustible, l'axe du téton et l'axe du bol soient de préférence confondus.

En se rapportant en plus à la figure 2, le téton 48, de forme générale tronconique, comporte un sommet 50 de préférence arrondi, se poursuivant, en s'écartant symétriquement de l'axe XX vers l'extérieur du piston 16, par une surface inclinée 52 sensiblement rectiligne se poursuivant par un flanc inclinée 54 pour arriver à un fond 56 du bol.

Bien entendu et cela sans sortir du cadre de l'invention, la surface inclinée 52 peut être inexistante (longueur nulle) et le flanc incliné 54 raccorde alors le sommet du téton au fond du bol.

Dans l'exemple de la figure 2, le fond de ce bol est arrondi avec une surface arrondie concave 58 en arc de cercle de rayon R1, dite surface arrondie interne, raccordée au bas du flanc incliné 54 et une autre surface arrondie concave 60 en arc de cercle de rayon R2, dite surface arrondie externe, raccordée par une de ses extrémités à l'extrémité basse de la surface arrondie interne à un point M et par l'autre de ses extrémités à une paroi latérale 62, ici sensiblement verticale, à un point N.

Les deux surfaces arrondies 58 et 60 délimitent ainsi la partie basse d'un volume torique, ici un tore de section sensiblement cylindrique 64 et de centre B dont le rôle sera explicité dans la suite de la description.

La paroi latérale 62 se poursuit, toujours en s'écartant de l'axe XX, par une surface arrondie convexe 66 en arc de cercle de rayon R3, dite réentrant, aboutissant à un plan inclinée 68 relié à une surface d'inflexion concave 69 raccordée à une surface sensiblement plane 70. Cette surface plane se continue par une surface convexe externe 72 en arc de cercle de rayon R5 qui arrive à une surface plane 74 s'avançant jusqu'au voisinage de la paroi du cylindre.

La chambre de combustion comprend ainsi deux zones distinctes Z1 et Z2 dans lesquelles s'effectue le mélange entre le comburant qu'elles contiennent (air - suralimenté ou non - ou mélange d'air et de gaz brûlés recirculés) et le combustible provenant de l'injecteur ainsi que la combustion du mélange carburé ainsi formé.

Pour des raisons de simplification de la suite de la description, ces zones sont dénommées zones de combustion

La zone Z1, délimitée par le téton 48, le tore 64 du fond du bol, la paroi 62 et la surface arrondie convexe 66, forme la zone basse de la chambre de combustion qui est associée à la nappe inférieure 36 de jets de combustible d'axe C1. La zone Z2, démarquée par le plan incliné 68, la surface concave 69, la surface sensiblement plane 70, la surface convexe 72, la surface plane 74, la paroi interne périphérique du cylindre et la culasse 12, constitue la zone haute de cette chambre qui est associée à la nappe supérieure 38 de jets de combustible d'axe C2.

Dans cette configuration, le bol comprend, pour une position du piston proche du point mort haut :
- un diamètre externe de fond de bol FD avec un rayon considéré entre l'axe XX et le point M le plus bas du bol, c'est à dire à l'intersection entre les surfaces de rayons R1 et R2,
- un diamètre de l'ouverture de bol BD avec un rayon considéré au voisinage du fond du bol et correspondant à une distance prise entre l'axe XX et le point le plus éloigné de la surface concave externe 60,
- un diamètre de col GD avec un rayon qui correspond à la distance entre l'axe XX et la paroi verticale 62 qui délimite la section de sortie de ce bol,
- un diamètre d'injection haut ID1 avec un rayon qui correspond à la distance entre l'axe XX et le début de la surface d'inflexion 69 au point P entre le plan incliné 68 et la surface convexe 66 en délimitant une longueur L6 des jets 38 entre l'origine T2 de l'axe C2 des jets sur l'axe du nez de l'injecteur et le point P et qui répond à la formule ID1/sin(a2),
- une longueur développée de la demi-coupe diamétrale Cb du bol, constituée par la longueur depuis l'intersection du sommet du téton avec l'axe XX jusqu'à la paroi du cylindre,
- une hauteur H de téton entre le fond du bol au point M jusqu'au sommet du téton,
- une hauteur L du bol entre le fond du bol au point M jusqu'à la surface plane 74,
- une hauteur de jonction L3, qui correspond à l'étendu de la paroi latérale 62, considérée entre la fin de la surface arrondie externe 60 au point N et le début de la surface arrondie externe 66,
- une hauteur L4 considérée entre le point P et le point M,
- un angle d'inclinaison a3 par rapport à une verticale pour le flanc incliné 54,
- un angle d'inclinaison a4 formé par l'axe principal C1 des jets de combustible de la nappe inférieure 36 impactant le tore avec la tangente au point d'impact F en délimitant une longueur L5 des jets 40 entre l'origine T1 de l'axe C1 des jets sur l'axe du nez de l'injecteur et le point F. Cette longueur L5 répond à la formule ID2/sin(a1) avec ID2 qui correspond à un diamètre d'injection bas avec un rayon qui correspond à la distance entre l'axe XX et le point F,
- un angle d'inclinaison a5 considéré à la tangence de la surface arrondie externe 60 avec la paroi latérale 62 au point N,
- un angle d'inclinaison a6 par rapport à l'horizontal et la tangente à la paroi sensiblement plane 70,
- un angle d'inclinaison a7 par rapport à l'horizontale et le plan incliné 68 au point d'intersection P.

Tous ces paramètres sont appréciés pour une position du piston 16 au voisinage du point mort haut qui correspond à une distance D considérée entre le point M et l'origine T2 de l'axe C2 des jets 42.

Plus précisément, cette distance D est égale à la somme de la hauteur L4 et de la hauteur C, hauteur C qui correspond à la hauteur axiale entre l'origine T2 et le point P. Cette hauteur correspond à la formule ID1/tan(a2).

Ainsi, les paramètres dimensionnels et angulaires de ce bol satisfont à au moins l'une des conditions suivantes :
- l'angle a4 est supérieur à 80°. Ceci revient à faire passer plus de la moitié du jet de combustible entre le centre B du tore 64 et le téton et plus précisément la partie basse au niveau du point M et donc d'assurer un mouvement aérodynamique dans le tore remontant vers le haut du cylindre,
- l'angle a5 doit être positif et inférieur à 90°. Préférentiellement, il doit être de l'ordre de 30° à 40° afin de diriger les jets de combustible 40 de la nappe inférieure 36 vers le volume de comburant S1 pour utiliser le comburant de cette zone tout en limitant la remontée de ce combustible vers la nappe supérieure 38,
- le volume S1 de comburant situé entre les jets 40 de combustible de la nappe inférieure est minimisé, toujours dans le souci d'optimiser l'utilisation du comburant dans la chambre,
- la position du haut du téton 48 est la plus proche possible du nez 32 de l'injecteur 30 afin de limiter le volume de comburant sous l'injecteur qui ne sera pas impacté par les jets de combustible, ce qui revient encore une fois à minimiser le volume S1. Ainsi le rapport H/L est supérieur à 40% et préférentiellement supérieur à 60%,
- l'angle a3 est sensiblement égal ou supérieur à l'angle a1 de la nappe inférieure (-10°<a3-a1 <10°). Ainsi, l'axe général des jets de la nappe inférieure tangente le flanc 54 du téton. Les jets de combustible 40 de la nappe inférieure 36 peuvent ainsi interagir avec la surface arrondie 58 en se vaporisant totalement avant d'impacter le piston,
- le volume de comburant S2 entre les deux nappes est non nul puisque l'interaction entre nappes est néfaste pour les polluants. Le volume S2 doit néanmoins être minimisé. Pour se faire, la longueur de jonction L3 entre le tore et le réentrant 66 (surface arrondie convexe de rayon R3) doit être telle que L3/(2*longueur de R2)<1 ou (L3/longueur de R2<2) afin d'assurer que le volume de comburant S2 disponible entre les nappes supérieure 38 et inférieure 36 est faible par rapport au volume de combustible généré par les jets de la nappe inférieure,
- la deuxième zone de combustion Z2 située dans la partie haute du piston qui débute à partir du réentrant 66 est destinée aux jets de combustible 42 de la nappe supérieure 38,
- le volume de combustion de la zone Z2 est au moins égal au dixième du volume total du bol,
- la zone, dite de chasse, est formée par le plan incliné 68, la surface concave 69, la surface plane 70, la surface convexe 72 et la surface plane 74. L'angle a6 est compris entre 10° et 75°, ce qui permet d'éclater les jets de combustible 42 pour créer un mouvement aérodynamique au-dessus du piston et additionnellement d'aller utiliser le comburant dans la zone de chasse. Cet aérodynamique permet un meilleur mélange combustible/comburant au-dessus du piston, notamment pendant la détente et favoriser ainsi l'oxydation des gaz brûlés,
- pour favoriser la répartition du combustible issu des jets 42 dans la chasse, une surface 68 de guidage est prévue entre le réentrant 66 et la surface 70. Cette surface de guidage peut être arrondie en prolongement du réentrant ou sensiblement plane. Cette surface de guidage sert à concentrer les jets de combustible 42 et à les guider vers la surface convexe 72. Ainsi cette surface de guidage a un angle a7 au point d'intersection P dont l'écart avec l'angle de nappe a2 est de moins de 45°,
- l'emplacement de la surface d'inflexion 69 est tel que les distances L5 et L6 sont approximativement du même ordre (0.5<L5/L6<2). Ainsi, avantageusement les jets de combustible impacteront sensiblement en même temps le piston dans respectivement le tore et la zone d'inflexion.
- le diamètre ID1 doit être tel que ID1/GD>1 et ID1<(GD+ (Cb-GD)*2/3). Ceci permet aux jets de combustible 42 d'optimiser l'aérodynamique au-dessus du piston.

De plus,
- le rapport BD/L est inférieur à 6, préférentiellement inférieur à 4,
- le rapport R2/R1 est inférieur à 1, préférentiellement inférieur à 0.6,
- le rapport FD/BD est inférieur à 1,
- le rapport Cb/BD est inférieur à 2 pour conserver une vaporisation complète du combustible et éviter le mouillage de la paroi du cylindre,
- le rapport GD/BD est compris entre 0.7 et 1 pour l'aérodynamique du tore et la remontée des jets de combustible,
- le rapport H/L est supérieur à 40%, préférentiellement supérieur à 60% pour minimiser le volume de comburant entre le nez de l'injecteur et le téton,
- le rapport L5/L6 est compris entre 0.5 et 2 pour l'impact des deux nappes au même moment,
- A1 est compris entre 40° et 130° avec a1=A1/2,
- A2 est compris entre 130° et 180° avec a2=A2/2,
- a3 est sensiblement égal à a1,
- a4 est supérieur à 80°,
- a5 est compris entre 0° et 90°, de préférence sensiblement de 30° à 40°,
- l'angle a6 est compris entre 15° et 75°,
- a7-a2 est inférieur à 45°,
- le rapport ID1/GD est supérieur à 1,
- ID1 est inférieur à (GD+(Cb-GD)*2/3).

Ainsi, grâce à ce paramétrage du bol, les jets de combustible de la nappe inférieure 36 ciblent directement le tore 64 et n'impactent pas directement le réentrant 66.

De ce fait, la combustion du mélange combustible/comburant inférieur se déroule essentiellement dans le volume du tore alors que la combustion du mélange combustible/comburant supérieur se déroule essentiellement dans la chasse et au-dessus du piston.

De plus, l'interaction des jets de la nappe supérieure avec les jets de la nappe inférieure est limitée, ce qui permet d'homogénéiser le mélange comburant/combustible tout en respectant des contraintes de tenue mécanique à forte charge.

Le piston comporte également des moyens de refroidissement 76 comprenant au moins une galerie 78 associée à au moins une zone de combustion Z1, Z2.

Cette galerie 78 est une galerie circonférentielle et concentrique à l'axe XX logée dans la matière du piston en étant disposée chacune en regard d'au moins une zone de combustion Z1, Z2.

Comme cela est connu en soi, un fluide de refroidissement, comme de l'huile de lubrification du moteur, est admis à l'intérieur de la galerie au travers d'un conduit d'admission 80 sensiblement parallèle à l'axe XX et est évacué par un conduit d'évacuation (non représenté) de disposition semblable à celui du conduit d'admission.

Ainsi, le fluide de refroidissement circule à l'intérieur de la galerie en captant une partie la chaleur dégagée lors de la combustion du mélange carburé dans la zone de combustion en évitant ainsi une élévation excessive de la température du piston.

Plus particulièrement, la galerie 78 permet d'assurer l'évacuation de la chaleur des parties du bol telles que la surface arrondie externe 60, la surface arrondie convexe 66 (réentrant) et le plan inclinée 68 relié à la surface d'inflexion concave 69 raccordée à la surface sensiblement plane 70 de la zone de combustion Z2.

En effet, ces parties sont directement localisées à l'endroit où prend place la combustion et sont donc les parties du piston les plus sollicitées thermiquement.

Il est donc prévu d'aménager au moins une galerie de refroidissement circonférentielle 78 dans la matière du piston à proximité de la paroi délimitant la périphérie du bol incluant la surface arrondie convexe 66 (réentrant) et le plan inclinée 68 relié à la surface d'inflexion concave 69 raccordée à la surface sensiblement plane 70. Avantageusement, cette galerie peut également s'étendre en regard de la zone Z1 à proximité de la surface arrondie externe 60.

De manière avantageuse (voir figure 1), au moins une autre galerie 82 avec son conduit d'admission 84 et son conduit d'évacuation (non représenté) peut être aménagée dans la matière du piston à proximité de la surface arrondie externe 60 du tore 64 de la zone Z1 de manière à ce que la galerie 78 ne s'étende pas jusqu'à cette surface.

Ces galeries 78 et 82 ont préférentiellement une étendue surfacique de section comprise entre 20mm² et 200 mm² et sont alimentées en huile froide, à titre d'exemple, via une injection ou une projection de l'huile dans la/les galerie(s) au point mort bas du piston par le (les) conduit(s) d'admission 80, 84. L'évacuation de l'huile est assurée par gravité au travers de l'autre conduit (non représenté).

L'étendue surfacique de section des galeries, qui peut être différente d'une galerie à l'autre, permet ainsi d'éviter la formation de poches gazeuses nuisibles au refroidissement ainsi qu'une dégradation des qualités mécaniques du piston.

A titre d'exemple, la galerie peut comporter une section de forme cylindrique, comme une forme sensiblement trapézoïdale telle que celle de la galerie 78 ou une forme sensiblement circulaire comme illustrée par la galerie 82.

Il est cependant essentiel de disposer d'une épaisseur suffisante de matière de piston entre la zone de combustion et la galerie pour ne pas nuire à la tenue mécanique du piston.

Plus précisément et en se rapportant à titre d'exemple à la figure 3, la distance entre les différentes surfaces du bol et les parois de la galerie les plus proches du bol doit être comprise entre 2mm et 7mm.

Plus précisément, la distance E1, entre le plan inclinée 68 relié à la surface d'inflexion concave 69 et la paroi supérieure 86 de la galerie 78 la plus proche de ce plan inclinée, la distance E2, entre la surface arrondie externe 60 et la paroi de la galerie 78, ici la paroi verticale 88, la plus proche de cette surface, et la distance E3 entre la surface arrondie convexe 66 et la surface convexe 90 de cette galerie doivent être contenues dans la fourchette de distance mentionnée ci-dessus.

De même, dans l'éventualité où l'autre galerie 82 est placée en regard de la surface arrondie externe 60, la distance E4 entre cette surface arrondie et la paroi de la galerie la plus proche doit être comprise entre 2mm et 7mm.

La distance maximale de 7 mm permet d'assurer un refroidissement suffisant des parties du piston les plus chargées thermiquement et ainsi conserver un haut niveau de fiabilité.

## Revendications

1. Moteur à combustion interne à injection directe à allumage par compression comprenant au moins un cylindre (10), une culasse (12) portant des moyens d'injection de combustible (14) projetant le combustible selon au moins deux nappes (36, 38) de jets de combustible d'angles de nappe différents (A1, A2), un piston (16) coulissant dans ce cylindre, une chambre de combustion (34) délimitée sur un côté par la face supérieure (44) du piston comportant un téton (48) s'érigeant en direction de la culasse et disposé au centre d'un bol concave (46) avec au moins deux zones de mélange (Z1, Z2), et des moyens de refroidissement (76) du piston logés dans la matière du piston, **caractérisé en ce que** les moyens de refroidissement comprennent au moins un galerie (78, 82) circonférentielle concentrique au bol (46) du piston et disposée en regard desdites au moins deux zones de mélange (Z1, Z2).

2. Moteur à combustion interne selon la revendication 1, **caractérisé en ce que** la forme de la section de la galerie (78, 82) est une forme cylindrique.

3. Moteur à combustion interne selon la revendication 1 ou 2, **caractérisé en ce que** l'étendue surfacique de la section de la galerie (78, 82) est comprise entre 20 mm² et 200 mm².

4. Moteur à combustion interne selon l'une des revendications précédentes, **caractérisé en ce que** l'étendue surfacique d'une galerie est différente de l'étendue surfacique de l'autre galerie.

5. Moteur à combustion interne selon l'une des revendications précédentes, **caractérisé en ce que** les distances (E1, E2, E3, E4) entre les surfaces du bol et les parois (60, 66, 68) de la galerie la plus proches sont comprises entre 2mm et 7mm.

## Patentansprüche

1. Verbrennungsmotor mit Direkteinspritzung mit Kompressionszündung, umfassend mindestens einen Zylinder (10), einen Zylinderkopf (12), der Mittel (14) zur Einspritzung von Kraftstoff aufweist, die den Kraftstoff entlang mindestens zwei Bahnen (36, 38) von Kraftstoffstrahlen mit unterschiedlichen Bahnwinkeln (A1, A2) spritzen, einen Kolben (16), der in diesem Zylinder gleitet, eine Brennkammer (34), die auf einer Seite durch die Oberseite (44) des Kolbens begrenzt wird, der einen Ansatz (48) aufweist, der sich in Richtung des Zylinderkopfs nach oben erstreckt und in der Mitte einer konkaven Mulde (46) mit mindestens zwei Mischzonen (Z1, Z2) angeordnet ist, und Mittel (76) zur Kühlung des Kolbens, die in dem Material des Kolbens untergebracht sind, **dadurch gekennzeichnet, dass** die Kühlmittel mindestens einen zu der Mulde (46) des Kolbens konzentrischen Umfangskanal (78, 82) umfassen, der gegenüber den mindestens zwei Mischzonen (Z1, Z2) angeordnet ist.

2. Verbrennungsmotor nach Anspruch 1, **dadurch gekennzeichnet, dass** die Querschnittsform des Kanals (78, 82) zylindrisch ist.

3. Verbrennungsmotor nach Anspruch 1 oder 2, **dadurch gekennzeichnet, dass** die Querschnittsflächenerstreckung des Kanals (78, 82) zwischen 20 mm² und 200 mm² liegt.

4. Verbrennungsmotor nach einem der vorhergehenden Ansprüche, **dadurch gekennzeichnet, dass** die Flächenerstreckung eines Kanals von der Flächenerstreckung des anderen Kanals verschieden ist.

5. Verbrennungsmotor nach einem der vorhergehenden Ansprüche, **dadurch gekennzeichnet, dass** die Abstände (E1, E2, E3, E4) zwischen den Flächen der Mulde und den nächstgelegenen Wänden (60, 66, 68) des Kanals zwischen 2 mm und 7 mm liegen.

## Claims

1. Compression-ignition direct-injection internal combustion engine comprising at least one cylinder (10), a cylinder head (12) bearing fuel injection means (14) spraying the fuel in at least two layers (36, 38) of fuel jets with different layer angles (A1, A2), a piston (16) sliding in this cylinder, a combustion chamber (34) delimited on one side by the upper face (44) of the piston comprising a nipple (48) rising in the direction of the cylinder head and arranged at the centre of a concave bowl (46) with at least two mixing zones (Z1, Z2), and means (76) for cooling the piston that are housed in the material of the piston, **characterized in that** the cooling means comprise at least one circumferential gallery (78, 82) concentric with the bowl (46) of the piston and arranged facing said at least two mixing zones (Z1, Z2).

2. Internal combustion engine according to Claim 1, **characterized in that** the shape of the cross section of the gallery (78, 82) is a cylindrical shape.

3. Internal combustion engine according to Claim 1 or 2, **characterized in that** the surface area of the cross section of the gallery (78, 82) is between 20 mm² and 200 mm².

4. Internal combustion engine according to one of the preceding claims, **characterized in that** the surface area of one gallery is different from the surface area of the other gallery.

5. Internal combustion engine according to one of the preceding claims, **characterized in that** the distances (E1, E1, E3, E4) between the surfaces of the bowl and the nearest walls (60, 66, 68) of the gallery are between 2 mm and 7 mm.
